(19) **Europäisches Patentamt / European Patent Office / Office européen des brevets**

(11) **EP 3 905 746 A1**

(12) **EUROPEAN PATENT APPLICATION**
published in accordance with Art. 153(4) EPC

(43) Date of publication:
**03.11.2021 Bulletin 2021/44**

(21) Application number: **19905948.6**

(22) Date of filing: **20.12.2019**

(51) Int Cl.:
**H04W 16/14** (2009.01)

(86) International application number:
**PCT/CN2019/126950**

(87) International publication number:
**WO 2020/135248 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2018 CN 201811635724**

(71) Applicant: **Sony Group Corporation**
**108-0075 Tokyo (JP)**

(72) Inventors:
• **LU, Cong**
 **Beijing 100044 (CN)**
• **SUN, Chen**
 **Beijing 100028 (CN)**
• **GUO, Xin**
 **Beijing 100028 (CN)**
• **ZHAO, Youping**
 **Beijing 100044 (CN)**

(74) Representative: **D Young & Co LLP**
**120 Holborn**
**London EC1N 2DY (GB)**

(54) **FREQUENCY SPECTRUM MANAGEMENT APPARATUS, FREQUENCY SPECTRUM MANAGEMENT METHOD AND COMPUTER-READABLE STORAGE MEDIUM**

(57) The present disclosure relates to a frequency spectrum management apparatus, a frequency spectrum management method and a computer-readable storage medium. The frequency spectrum management apparatus in a coexistence system according to the present disclosure comprises a processing circuit configured to determine a plurality of settlement solutions of interference overlapping images according to differences between an interference overlapping image determined by the frequency spectrum management apparatus and interference overlapping images determined by other frequency spectrum management apparatuses in the coexistence system, and to determine a final settlement solution based on the total system utility of the coexistence system and according to the plurality of settlement solutions. By means of the frequency spectrum management apparatus, the frequency spectrum management method and the computer-readable storage medium according to the present disclosure, a settlement can be made for frequency spectrum allocation solutions generated by a plurality of frequency spectrum management apparatuses, such that consistent and rational frequency spectrum allocation is carried out.

Figure 2

**Description**

The present disclosure claims priority to Chinese Patent Application No. 201811635724.8, titled "FREQUENCY SPECTRUM MANAGEMENT APPARATUS, FREQUENCY SPECTRUM MANAGEMENT METHOD AND COMPUTER-READABLE STORAGE MEDIUM", filed on December 29, 2018 with the Chinese Patent Office, which is incorporated herein by reference in its entirety.

**FIELD**

Embodiments of the present disclosure generally relate to the technical field of wireless communications, and in particular to a spectrum management device, a spectrum management method and a computer-readable storage medium. More specifically, the present disclosure relates to a spectrum management device in a coexistence system, a spectrum management method performed by a spectrum management device in a coexistence system as well as a computer-readable storage medium.

**BACKGROUND**

With the development of wireless communication systems, users have increasingly high demands for services having high quality, high-speed and new services. Operators and device manufacturers are required to continually improve the system to meet user demands. Therefore, a large number of spectrum resources are required. However, limited spectrum resources are allocated to fixed operators and services, and a new available spectrum is very scarce and expensive. In this case, a concept of dynamic spectrum utilization is proposed, that is, spectrum resources which have been allocated to certain services but are not utilized sufficiently are utilized dynamically. For example, a spectrum of a channel on which there is no program on a digital television broadcast spectrum may be dynamically used to perform wireless mobile communication without interfering with reception of a television signal.

In this application example, since the television broadcast spectrum is allocated to a television broadcast system, the television broadcast system is a primary system, and a television is a primary user. A mobile communication system may be referred to as a secondary system, and a user in the mobile communication system may be referred to as a secondary user. That is, a primary system may be a system that has a right to use a spectrum. A user in the primary system may be referred to as a primary user. A secondary system may be a system that has no right to use a spectrum and only properly uses the spectrum when a primary system to which the spectrum is allocated does not use the spectrum. In addition, both the primary system and the secondary system may have the spectrum usage right, but they have different priority levels in using the spectrum.

In the coexistence system, there may be multiple secondary systems managed by multiple spectrum management devices. Spectrum allocation solutions determined by multiple spectrum management devices may be different. A technical problem urgently required to be solved is how to reconcile spectrum allocation solutions generated by multiple spectrum management devices and perform consistency spectrum allocation.

**SUMMARY**

This summary section provides a general summary of the present disclosure, rather than a comprehensive disclosure of full scope or features of the present disclosure.

An object of the present disclosure is to provide a spectrum management device, a spectrum management method and a computer-readable storage medium, to reconcile spectrum allocation solutions generated by multiple spectrum management devices and perform consistency and reasonable spectrum allocation

According to an aspect of the present disclosure, a spectrum management device in a coexistence system is provided. The spectrum management device includes a processing circuitry configured to: determine multiple reconciliation solutions of an interference overlapping graph according to differences between an interference overlapping graph determined by the spectrum management device and an interference overlapping graph determined by other spectrum management device in the coexistence system; and determine a final reconciliation solution according to the multiple reconciliation solutions based on system total utility of the coexistence system.

According to another aspect of the present disclosure, a spectrum management method performed by a spectrum management device in a coexistence system. The method includes: determining multiple reconciliation solutions of an interference overlapping graph according to differences between an interference overlapping graph determined by the spectrum management device and an interference overlapping graph determined by other spectrum management device in the coexistence system; and determining a final reconciliation solution according to the multiple reconciliation solutions based on system total utility of the coexistence system.

According to another aspect of the present discourse, a computer-readable storage medium including executable computer instructions is provided. The executable computer instructions, when being executed by a computer, cause the computer to perform the spectrum management method according to the present discourse.

With the spectrum management device, the spectrum management method and the computer-readable storage medium according to the present disclosure, multiple reconciliation solutions are determined according to differences between multiple interference overlapping graph determined by multiple spectrum management devices, and a final reconciliation solution is determined based on system total utility of the coexistence system. In this way, reconciliation of the multiple spectrum allocation solutions is performed in a case of ensuring optimal system total utility, thereby performing consistency spectrum allocation in the coexistence system.

From the description provided herein, further applicability areas will become apparent. The description and specific examples in the summary are only schematic, rather than limiting the scope of the present disclosure.

## BRIEF DESCRIPTION OF THE DRAWINGS

The drawings described herein are for illustrative purposes only of preferred embodiments rather than all possible embodiments, and are not intended to limit the scope of the present disclosure. In the drawing:

Figure 1 is a schematic diagram showing an application scenario according to an embodiment of the present disclosure;
Figure 2 is a block diagram showing an example of a configuration of a spectrum management device according to an embodiment of the present disclosure;
Figure 3 is a schematic diagram showing interference overlapping graphs generated by different spectrum management devices according to an embodiment of the present disclosure;
Figure 4 is a schematic diagram showing multiple reconciliation solutions determined by an interference overlapping graph shown in Figure 3 according to an embodiment of the present disclosure;
Figure 5 is a schematic diagram showing performing coloring for multiple reconciliation solutions shown in Figure 4 and calculating system total utility according to an embodiment of the present disclosure;
Figure 6 is a schematic diagram showing a final reconciliation solution determined by multiple reconciliation solutions shown in Figure 5 according to an embodiment of the present disclosure;
Figure 7 is a signaling flowchart showing a spectrum management method according to an embodiment of the present disclosure;
Figure 8 is a signaling flowchart showing a spectrum management method according to an embodiment of the present disclosure;
Figure 9 is a signaling flowchart showing a spectrum management method according to an embodiment of the present disclosure;
Figure 10 is a signaling flowchart showing a spectrum management method according to an embodiment of the present disclosure;
Figure 11 is a schematic diagram of a curve showing system total utility variation over time according to an embodiment of the present disclosure;
Figure 12 is a flowchart showing a method of selecting a reconciliation solution by using a genetic algorithm according to an embodiment of the present disclosure;
Figure 13 is a flowchart showing a spectrum management method performed by a spectrum management device according to an embodiment of the present disclosure; and
Figure 14 is a block diagram showing an example of a server capable of implementing a spectrum management device according to the present disclosure.

Although the present disclosure is susceptible to various modifications and alternative forms, specific embodiments thereof have been shown in the drawings as examples and are described in detail herein. It should be understood that description for the specific embodiments is not intended to limit the present disclosure into a disclosed specific form, and the present disclosure aims to cover all modification, equivalents and alternations within the spirit and scope of the present disclosure. It is noted that throughout the several figures, corresponding reference numerals indicate corresponding parts.

## DETAILED DESCRIPTION OF EMBODIMENTS

Examples of the present disclosure are fully described with reference to the drawings. The following description is merely exemplary rather than being intended to limit the present disclosure and applications or uses of the present disclosure.

The exemplary embodiments are provided such that the present disclosure will become thorough, and will convey the scope thereof fully to those skilled in the art. Examples of numerous specific details, such as specific components, devices, and methods, are set forth to provide a thorough understanding of the embodiments of the present disclosure. It will be apparent to those skilled in the art that exemplary embodiments may be implemented in many different forms without the use of specific details, and they should not be construed as limiting the scope of the present disclosure. In some exemplary embodiments, well-known processes, well-known structures, and well-known technologies are not described in detail.

Description is made in the following order:

1. Description of a scenario
2. Example of a configuration of a spectrum management device
3. Embodiment of spectrum management method
4. Application example

<1. Description of a scenario>

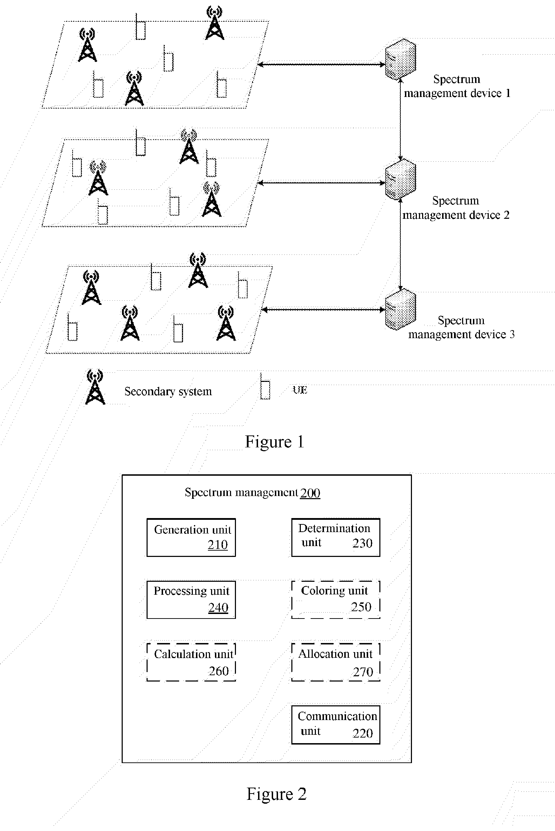

Figure 1 is a schematic diagram showing an application scenario according to the present disclosure. In the present disclosure, for ease of description, a system composed of one or more spectrum management devices and secondary systems and secondary users managed by the one or more spectrum management devices is referred to as a coexistence system. For example, Figure 1 shows an example of a coexistence system. As shown in Figure 1, there are three spectrum management devices in the coexistence system, namely, a spectrum management device 1, a spectrum management device 2, and a spectrum management device 3. The three spectrum management devices manage multiple secondary systems and multiple secondary users. For example, the spectrum management device 1 manages three secondary systems and four secondary users, the spectrum management device 2 manages three secondary systems and five secondary users, and the spectrum management device 3 manages four secondary systems and four secondary users. Areas managed by the three spectrum management devices shown in Figure 1 may overlap geographically. That is, for ease of description, as shown in Figure 1, secondary systems and secondary users in the area involved in a coexistence system are displayed hierarchically according to the different spectrum management devices which provide services. Actually, these secondary systems and secondary users are located in the area involved in the coexistence system in a decentralized manner.

In the scenario shown in Figure 1, three spectrum management devices may obtain information on all secondary systems in the coexistence system through interaction, such that each of the spectrum management devices may generate a spectrum allocation solution for the coexistence system. However, types of services supported by each of the spectrum management devices may be different. For example, some spectrum management devices provide narrowband internet of things (IOT) applications such as remote meter reading and billing, while some spectrum management devices provide video broadband communication services. In this case, the spectrum allocation solutions generated by spectrum management devices may be different.

For this scenario, according to the present disclosure, a spectrum management device in a coexistence system, a spectrum management method performed by the spectrum management device, and a computer-readable storage medium are proposed, so as to perform reconciliation on multiple spectrum allocation solutions in a case of ensuring optimal system total utility, thereby performing consistency spectrum allocation in the coexistence system.

It is worth noting that Figure 1 is only an example of an application scenario of the present disclosure. That is, the parameters such as the number of spectrum management devices in the coexistence system, the number of secondary systems and the number of secondary users managed by each of the spectrum management devices and the like may be different. In addition, for ease of description, a primary system and a primary user are not shown in Figure 1. In other words, the present disclosure is applicable to any wireless communication system including multiple spectrum management devices.

In addition, the embodiments of the present disclosure are also applicable to a wireless communication system including multiple network slicing.

Network slicing technology is a technology of virtualizing a network, which allows multiple logical networks to run on a shared physical network infrastructure. Each of the logical networks is isolated, and may provide customized network characteristics, such as bandwidth, delay, and capacity, to be flexibly applicable to different network application scenarios. For example, the 5th generation mobile communication (5G) network will applicable to three types of scenarios: mobile broadband, massive Internet of Things, and mission-critical Internet of Things. These three scenarios have different requirements for network services. A mobile broadband scenario involves applications such as ultra-high-definition videos, holographic technology and augmented reality/virtual reality, and therefore a high network bandwidth and speed are required. In a massive Internet of Things scenario, massive Internet of Things sensors are deployed in fields such as measurement, construction, agriculture, logistics, smart cities, and home and the like. These sensor devices are very dense, large in scale, and mostly static, and thus, they have relatively low requirements of latency and mobility. A mission-critical Internet of Things scenario is mainly applied in fields such as unmanned driving, Internet of Vehicles, automated factories, and telemedicine, and thus, ultra-low latency and high reliability are required. Therefore, according to different service requirements, a physical network may be sliced into multiple virtual networks, such as a smartphone slice network, an autonomous driving slice network, and a massive Internet of Things slice network.

In a wireless communication system including multiple network slices, appropriate spectrum resources may be allocated to network slices according to the spectrum requirements and communication quality requirements of different network slices. Since all network slices share a physical network infrastructure, there is also a technical problem that spectrum allocation solutions generated by different network slices may conflict. According to an embodiment of the present disclosure, a whole composed of one spectrum management device and all secondary systems and secondary users in the coexistence system may be regarded as a network slice in a 5G communication system. Therefore, according to an embodiment of the present disclosure, reconciliation of the spectrum allocation solutions of multiple network slices is performed in a case of ensuring optimal system total utility, and consistency spectrum allocation is performed.

In summary, the present disclosure is applicable to any wireless communication system that needs to reconcile multiple spectrum allocation solutions to perform consistency spectrum allocation.

The wireless communication system according to the present disclosure may be a 5G NR (new radio) communication system.

The spectrum management device according to the present disclosure may be a SAS (Spectrum Access System). The SAS may determine a spectrum range that may be used by a secondary system based on spectrum usage of a primary system, a location of the primary system, and a location of the secondary system. The SAS may be a spectrum management device determined according to a geographic location, and each SAS may manage secondary systems in a certain area. For example, the SAS may be a spectrum allocation functional module provided by a geographic location database operator authorized according to national laws and regulations.

The spectrum management device according to the present disclosure may also be a CxM (Coexistence Manager). The CxM may be a spectrum management device that adjusts spectrum usage of a secondary system within a range of usable spectrum resources. Each CxM manages a CSG (coexistence group), and a CSG may include one or more secondary systems. For example, the CxM may be an operator, a network provider or a network management organization of an office area, a residential area or a university campus.

The secondary system according to the present disclosure may be a CBSD (Citizens Broadband Radio Service Devices). The CBSD may be a network-side device, such as any type of TRP (Transmit and Receive Port) and a base station device. For example, the CBSD be an eNB or a gNB (a base station in the 5th generation communication system).

The user equipment (UE) according to the present disclosure may be a mobile terminal (such as a smartphone, a tablet personal computer (PC), a notebook PC, a portable game terminal, a portable/dongle mobile router and a digital camera) or an in-vehicle terminal (such as a vehicle navigation device). The UE may be implemented as a terminal performing machine to machine (M2M) communication (also referred to as a machine type communication (MTC) terminal). In addition, the UE may be a wireless communication module installed on each of the above terminals (such as an integrated circuit module including a single chip).

<2. Example of a configuration of a spectrum management device>

Figure 2 is a block diagram showing an example of a configuration of a spectrum management device 200 according to an embodiment of the present disclosure. The spectrum management device 200 here may be, for example, a SAS or a CxM in a coexistence system. The coexistence system may include, for example, a spectrum management device 200 and one or more other spectrum management devices. Further, both the spectrum management device 200 and other spectrum management device may manage one or more secondary systems.

As shown in Figure 2, the spectrum management device 200 may include a generation unit 210, a communication unit 220, a determination unit 230, and a processing unit 240.

Here, all units of the spectrum management device 200 may be included in a processing circuitry. It should be noted that the spectrum management device 200 may include one processing circuitry or multiple processing circuitries. Further, the processing circuitry may include various discrete functional units to perform different functions and/or operations. It should be noted that these functional units may be physical entities or logical entities, and units with different names may be implemented by the same physical entity.

According to an embodiment of the present disclosure, the generation unit 210 may generate an interference overlapping graph of a coexistence system where the spectrum management device 200 is located. Here, the generation unit 210 may use any method known in the art to generate the interference overlapping graph, which is not limited in the present disclosure.

According to an embodiment of the present disclosure, the communication unit 220 may receive an interference overlapping graph of the coexistence system generated by other spectrum management device from the other spectrum management device in the coexistence system. Here, the coexistence system includes a spectrum management device 200 and one or more other spectrum management devices except the spectrum management device 200. The one or more spectrum management devices may have the same structure as the spectrum management device 200. In other words, the spectrum management device 200 may receive the interference overlapping graph from one or more other spectrum management devices via the communication unit 220.

According to an embodiment of the present disclosure, the determination unit 230 may receive an interference overlapping graph generated by the spectrum management device 200 from the generation unit 210, and may receive an interference overlapping graph generated by other spectrum management device by using the communication unit 220. Further, the determination unit 230 may determine multiple reconciliation solutions of an interference overlapping graph according to difference between an interference overlapping graph determined by the spectrum management device 200 and interference overlapping graphs determined by one or more other spectrum management devices. That is, the determination unit 230 may determine multiple reconciliation solutions based on difference between at least two interference overlapping graphs.

According to an embodiment of the present disclosure, the processing unit 240 may determine a final reconciliation solution of the coexistence system based on system total utility of the coexistence system and according to the multiple reconciliation solutions determined by the determination unit 230. Here, the final reconciliation solution may be one of the multiple reconciliation solutions determined by the determination unit 230.

As described above, the spectrum management device 200 according to the present disclosure may determine multiple reconciliation solutions according to differences between multiple interference overlapping graph generated by multiple spectrum management devices, and may determine a final reconciliation solution based on system total utility of the coexistence system. In this way, the reconciliation of multiple spectrum allocation solutions is performed in a case of ensuring optimal system total utility, thereby performing consistency spectrum allocation in a coexistence system.

According to an embodiment of the present disclosure, the spectrum management device 200 may receive secondary system information from all secondary systems managed by the spectrum management device 200 via the communication unit 220, including but not limited to location information and power information of the secondary systems. Further, the spectrum management device 200 may receive information of all secondary systems managed by other spectrum management device from the other spectrum management device via the communication unit 220, including but not limited to location information and power information of the secondary systems. In this way, the spectrum management device 200 may obtain information of all secondary systems in the coexistence system.

According to an embodiment of the present disclosure, the generation unit 210 may determine an interference overlapping graph according to all the secondary systems in the coexistence system. That is, the generation unit 210 may determine whether there is interference between any two secondary systems according to the information of all the secondary systems in the coexistence system. Here, the generation unit 210 may determine locations of points in the interference overlapping graph according to the location information of the secondary system, to represent secondary systems by using the points in the interference overlapping graph. Further, the generation unit 210 may determine whether there is interference between any two secondary systems according to any known method in the art, to represent that there is interference between the two secondary systems corresponding to two points by using sides between the two points. That is, when there is a side between two points, it means that there is interference between two secondary systems corresponding to the two points; when there is no side between the two points, it means that there is no interference between the two secondary systems corresponding to the two points.

According to an embodiment of the present disclosure, other spectrum management device may also generate the interference overlapping graph as described above. Therefore, the spectrum management device 200 may obtain at least two interference overlapping graphs.

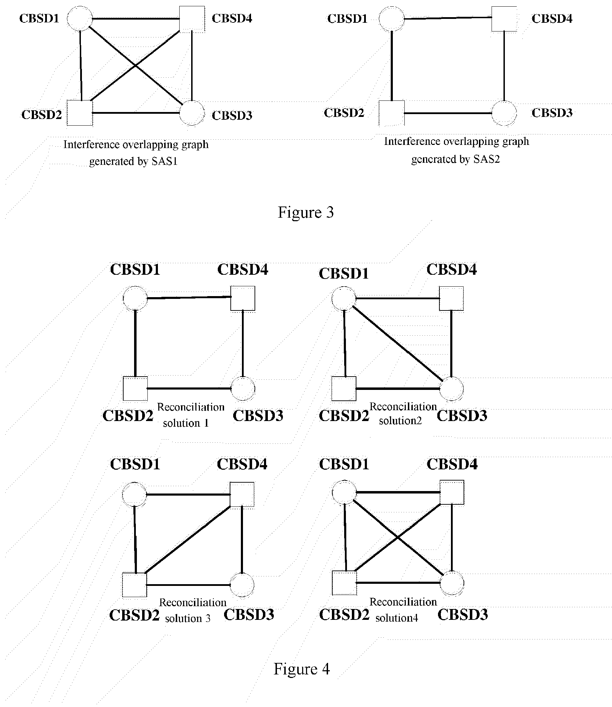

Figure 3 is a schematic diagram showing interference overlapping graphs generated by different spectrum management devices according to an embodiment of the present disclosure. In an example of Figure 3, a spectrum management device is a SAS and a secondary system is a CBSD. Furthermore, it is assumed that there are two spectrum management devices in a coexistence system, namely, a SAS1 and a SAS2, and a circular CBSD (CBSD1 and CBSD3) represents a secondary system managed by the SAS1, and a square CBSD (CBSD2 and CBSD4) represents a secondary system managed by the SAS2. As described above, the SAS1 and the SAS2 may obtain information on the CBSD1, the CBSD2, the CBSD3 and the CBSD4 through interactions with each other.

As shown in Figure 3, in an interference overlapping graph generated by the SAS1, four points represent four secondary systems, respectively. Further, there is a side between the CBSD1 and the CBSD2, which means that there is interference between the CBSD1 and the CBSD2; there is a side between the CBSD1 and the CBSD3, which means that there is interference between the CBSD1 and the CBSD3; there is a side between the CBSD1 and the CBSD4, which means that there is interference between the CBSD1 and the CBSD4; there is a side between the CBSD2 and the CBSD3, which means there is interference between the CBSD2 and the CBSD3; there is a side between the CBSD2 and the CBSD4, which means there is interference between the CBSD2 and the CBSD4; and there is a side between the CBSD3 and the CBSD4, which means that there is interference between the CBSD3 and the CBSD4. Similarly, in an interference overlapping graph generated by the SAS2, four points represent four secondary systems, respectively. Further, there is a side between the CBSD1 and the CBSD2, which means that there is interference between the CBSD1 and the CBSD2; there is a side between the CBSD2 and the CBSD3, which means that there is interference between the CBSD2 and the CBSD3; there is a side between the CBSD3 and the CBSD4, which means that there is interference between the CBSD3 and the CBSD4; and there is a side between the CBSD1 and the CBSD4, which means that there is interference between the CBSD1 and the CBSD4.

According to an embodiment of the present disclosure, the determination unit 230 may determine a side with difference according to an interference overlapping graph determined by the spectrum management device and an interference overlapping graph determined by other spectrum management device.

According to an embodiment of the present disclosure, in at least two interference overlapping graphs composed of an interference overlapping graph generated by the spectrum management device 200 and an interference overlapping graph generated by other spectrum management device, in a case that an judgment with respect to whether there is a certain side is inconsistent, the determination unit 230 may determine that this side is a side with difference. For example, it is assumed that there are three spectrum management devices in a coexistence system, with respect to a certain side, there is this side in an interference overlapping graph generated by one spectrum management device, while in interference overlapping graphs generated by other two spectrum management devices, there is no this side, so it may be determined that this side is a side with difference. For example, in an example shown in Figure 3, according to the interference overlapping graph generated by the SAS1 and the interference overlapping graph generated by the SAS2, it may be determined that the sides with differences are the side between the CBSD1 and the CBSD3 as well as the side between the CBSD2 and the CBSD4.

According to an embodiment of the present disclosure, the determination unit 230 may determine multiple reconciliation solutions according to sides with differences. Here, in the multiple reconciliation solutions determined by the determination unit 230, with respect to sides without differences, the same determination as determination for all interference overlapping graphs is maintained. With respect to each of the sides with differences, there are two cases of "existence" and "nonexistence". According to an embodiment of the present disclosure, with respect to two cases of sides with differences, the determination unit 230 may exhaust all cases as final multiple reconciliation solutions. That is, when the number of sides with differences is N, the number of reconciliation solutions determined by the determination unit 230 is $2^N$.

Figure 4 is a schematic diagram showing multiple reconciliation solutions determined by the interference overlapping graph shown in Figure 3 according to an embodiment of the present disclosure. As shown in Figure 4, in the case where the sides with differences are the side between CBSD1 and CBSD3 and the side between CBSD2 and CBSD4, the determination unit 230 may determine four reconciliation solutions.

As shown in Figure 4, in the four reconciliation solutions, for the sides without differences, that is, the side between CBSD1 and CBSD2, the side between CBSD2 and CBSD3, the side between CBSD3 and CBSD4, and the side between CBSD4 and CBSD1, the same judgment as the interference overlapping graph generated by SAS1 and the interference overlapping graph generated by SAS2 are kept, that is, all the sides above exist. In the case that the side between CBSD1 and CBSD3 and the side between CBSD2 and CBSD4 do not exist, the determination unit 230 determines the reconciliation solution 1; in the case that the side between CBSD1 and CBSD3 exists but the side between CBSD2 and CBSD4 does not exist, the determination unit 230 determines the reconciliation solution 2; in the case that the side between CBSD1 and CBSD3 does not exist but the side between CBSD2 and CBSD4 exists, the determination unit 230 determines the reconciliation solution 3; in the case that the side between CBSD1 and CBSD3 and the side between CBSD2 and CBSD4 both exist, the determination unit 230 determines the reconciliation solution 4. Thereby, based on the two interference overlapping graphs shown in Figure 3, the determination unit 230 can determine the four reconciliation solutions shown in Figure 4.

As described above, the generating unit 210 and the determination unit 230 are set forth in detail. It is worth noting that the determination unit 230 is explained by only taking the coexistence system including two spectrum management devices (that is, including the spectrum management device 200 and one other spectrum management device) as an example, which is also suitable for the example that the coexistence system includes three or more spectrum management devices and it will not be repeated in this disclosure.

As shown in Figure 2, according to an embodiment of the present disclosure, the spectrum management device 200 may further include a coloring unit 250 for coloring the interference overlapping graph corresponding to each of the multiple reconciliation solutions. Here, the coloring unit 250 may color the interference overlapping graph, so that the points with side connection have different colors and the points without side connection have the same color.

As we all know, the Graph Coloring Problem (GCP) is one of the most famous problems. Given an undirected graph, the Graph Coloring Problem is to divide the vertices of the undirected graph into K color groups, and each group forms an independent set, that is, there are no adjacent vertices. The optimized version is that it is desirable to get the smallest K value. According to an embodiment of the present disclosure, the coloring unit 250 may divide the points of the interference overlapping graph corresponding to each of the multiple reconciliation solutions into multiple color groups using a coloring method. In other words, there are no adjacent points in each color group, and the number of color groups is the smallest.

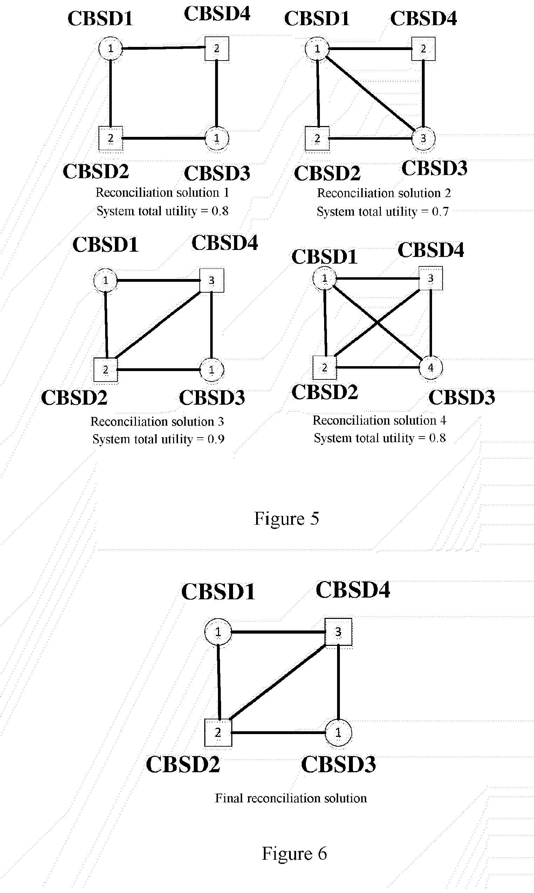

Figure 5 is a schematic diagram showing coloring multiple reconciliation solutions shown in Figure 4 and calculating the system total utility according to an embodiment of the present disclosure. In Figure 5, the number in the CBSD represents the number of the color, that is, the same number represents the same color, and different numbers represent different colors.

As shown in Figure 5, in the reconciliation solution 1, the coloring unit 250 divides the four points into two color groups, where there is no side connection between CBSD1 and CBSD3, and thus they have the same color (color 1), there is no side connection between CBSD2 and CBSD4, and thus they have the same color (color 2). Similarly, there are side connections between CBSD1 and CBSD2, between CBSD2 and CBSD3, between CBSD3 and CBSD4, and between CBSD1 and CBSD4, and thus they have different colors. According to an embodiment of the present disclosure, the coloring unit 250 may color all the interference overlapping graphs corresponding to the reconciliation solution 2, the reconciliation solution 3, and the reconciliation solution 4 shown in Figure 5.

According to an embodiment of the present disclosure, the coloring unit 250 may allocate spectrum resources to the secondary systems corresponding to points in the interference overlapping graph according to the colored interference overlapping graph. For example, secondary systems corresponding to points with the same color may be allocated the same spectrum resource, and secondary systems corresponding to points with different colors may be allocated different spectrum resources.

As shown in Figure 2, according to an embodiment of the present disclosure, the spectrum management device 200 may further include a calculation unit 260 for calculating the system total utility of the interference overlapping graph. Further, the calculation unit 260 may determine the system total utility of the interference overlapping graph according to the interference overlapping graph after coloring and allocating spectrum resources.

According to an embodiment of the present disclosure, the system total utility is a parameter that can reflect the performance of the coexistence system. For example, the system total utility is the utility value obtained by considering multiple performance parameters of the coexistence system, so it can reflect the comprehensive performance of the coexistence system. Preferably, the system total utility is a value of (0, 1). Several ways of calculating the system total utility will be explained by way of non-limiting examples in the following.

According to an embodiment of the present disclosure, the calculation unit 260 may calculate the system total utility of the coexistence system based on the following formula:

$$U_{total} = U_0 \cdot \sum_{i=1}^{M} w_i \cdot U_i \qquad (1)$$

In Formula (1), Utotai represents the system total utility, M is the total number of performance parameters considered when calculating the system total utility, $U_i$ is the utility value corresponding to the i-th parameter; $w_i$ is the weight of i-th parameter when calculating the system total utility, and the $w_i$ may be set according to the empirical value or the actual needs of the coexistence system, and $U_0$ may be obtained by the following formula:

$$U_0 = \begin{cases} 0, & SINR_{PU} < SINR_{PU}^{th} \\ 1, & SINR_{PU} \geq SINR_{PU}^{th} \end{cases} \qquad (2)$$

Here, $SINR_{PU}^{th}$ represents the signal-to-interference and noise ratio threshold of the primary user, and $SINR_{PU}$ represents the signal-to-interference and noise ratio of the primary user. That is to say, if the signal-to-interference and noise ratio ($SINR_{PU}$) of the primary user is lower than the predetermined threshold $(SINR_{PU}^{th})$, it means that the primary user does not get the interference protection that it should be, at this time, $U_0$ is equal to zero, the system total utility is also zero, and the entire allocation solution is invalid.

$U_i$ may be obtained by the following formula:

$$U_i = \left\{ \frac{2}{1+\exp\left[-\sigma_i \cdot (x_i - x_i^{th})\right]} - 1 \right\} \cdot 0.5 + 0.5 \quad (i = 1, \ldots, M) \qquad (3)$$

In Formula (3), $x_i$ is the value of the i-th parameter, $x_1^{th}$ is the threshold of the i-th parameter, and $\sigma_i$ is a constant.

As described above, the system total utility of the coexistence system may be determined according to the weighted sum of the utility values of multiple performance parameters of the coexistence system, and it can also be considered whether the signal-to-interference and noise ratio of the primary user is satisfied.

According to an embodiment of the present disclosure, the calculation unit 260 may also calculate the system total utility of the coexistence system based on the following formula:

$$U_{total} = \sum_{i=1}^{M} w_i \cdot U_i \qquad (4)$$

In Formula (4), $U_{total}$ represents the system total utility, M is the total number of parameters considered when calculating the system total utility, $U_i$ is the utility value corresponding to the i-th parameter; $w_i$ is the weight of the i-th parameter when calculating the system total utility, $w_i$ may be set according to the empirical value or the actual needs of the coexistence system, and $U_i$ may be obtained by the following formula:

$$U_i = \frac{\ln x_i - \ln x_{i1}}{\ln x_{i2} - \ln x_{i1}} \times m + n \qquad (5)$$

In Formula (5), $x_i$ is the value of the i-th parameter, $x_{i1}$ and $x_{i2}$ are the upper and lower limits of the i-th parameter, respectively, and m and n are constants.

According to an embodiment of the present disclosure, when the calculation unit 260 calculates the system total utility of the coexistence system based on Formula (4), $U_i$ can also be obtained by the following formula:

$$U_i = \frac{1}{A + Be^{-C(x_i - x_i^{th})}} + D \qquad (6)$$

In Formula (6), $x_i$ is the value of the i-th parameter, $x_1^{th}$ is the threshold of the i-th parameter, and A, B, C, and D are constants.

As described above, the system total utility of the coexistence system may be determined according to the weighted sum of the utility values of multiple performance parameters of the coexistence system.

According to an embodiment of the present disclosure, the parameters considered in the system total utility calculation method of the spectrum management device 200 and the weight $w_i$ of each parameter may be determined according to the service type supported by the spectrum management device 200.

According to an embodiment of the present disclosure, the parameters considered in the method for calculating the system total utility may be selected from one or more of the following parameters: cumulative interference suffered by the primary user in the coexistence system, cumulative interference suffered by the secondary user in the coexistence system, the amount of rollback of transmit power of the secondary users in the coexistence system, the spectrum utilization of the coexistence system, the uplink performance of the coexistence system, the downlink performance of the coexistence system, the network capacity of the coexistence system, and the system total overhead of the coexistence system .

According to the embodiments of the present disclosure, when allocating spectrum resources to a secondary system or a secondary user in a coexistence system, if the allocated spectrum resource is the same as the spectrum resource used by the primary user, interference will occur to the primary user. The sum of the interference caused to the primary user by all secondary users using the same spectrum resource as the primary user is called the cumulative interference suffered by the primary user.

According to the embodiments of the present disclosure, when allocating spectrum resources to a secondary system or a secondary user in a coexistence system, if the spectrum resource allocated to a secondary user is the same as the spectrum resource allocated to another secondary user, interference is caused by the secondary user to another secondary user. The sum of the interference caused by all secondary users using the same spectrum resource as a secondary user to the secondary user is called the cumulative interference suffered by the secondary user.

According to an embodiment of the present disclosure, when the cumulative interference suffered by the primary user exceeds a predetermined threshold, the transmission power of each secondary user that interferes with the primary user may be adjusted. The amount of rollback of transmit power of the secondary user represents the difference between the powers before and after the adjustment of the secondary user.

According to the embodiments of the present disclosure, the spectrum utilization rate of the coexistence system may represent the average value of the spectrum utilization rate of all secondary users in the coexistence system, and the spectrum utilization rate of the secondary user may represent the ratio of the actual spectrum resources used by the secondary users and the spectrum resources allocated to the secondary users.

The uplink of the coexistence system represents the link from the secondary user to the secondary system in the coexistence system, and the uplink performance of the coexistence system can represent the performance of the link, such as the uplink signal-to-interference and noise ratio (SINR), etc. Similarly, the downlink of the coexistence system represents the link from the secondary system to the secondary user in the coexistence system, and the downlink performance of the coexistence system can represent the performance of the link, such as the downlink signal-to-interference and noise ratio (SINR), etc.

The network capacity of the coexistence system can represent the maximum information transmission capacity of the channel under a certain signal-to-interference and noise ratio.

The system total overhead of the coexistence system can represent the time and space overhead spent on managing the coexistence system.

According to an embodiment of the present disclosure, the parameters considered in the system total utility calculation method of the spectrum management device 200 and the weight $w_i$ of each parameter may be determined according to the service type supported by the spectrum management device 200. For example, when the parameters considered in the system total utility calculation method of the spectrum management device 200 include the following three: the cumulative interference suffered by the primary user in the coexistence system, the cumulative interference suffered by the secondary user in the coexistence system, and the spectrum utilization rate of the coexistence system, M=3, $x_1$ represents the value of cumulative interference suffered by the primary user, $x_2$ represents the value of cumulative interference suffered by secondary users in the coexistence system, and $x_3$ represents the value of the spectrum utilization rate of the coexistence system, thus the utility values $U_1$, $U_2$, and $U_3$ corresponding to the three parameters may be calculated, and then the system total utility $U_{total}$ is calculated.

As described above, according to an embodiment of the present disclosure, the parameters considered in the system total utility calculation method of the spectrum management device 200 can be determined according to the service type supported by the spectrum management device 200, so as to determine the system total utility calculation formula. In this way, the comprehensive performance of the coexistence system can be calculated more accurately according to the service type.

According to an embodiment of the present disclosure, the path loss information in the coexistence system needs to be obtained when calculating the above-mentioned parameters. The path loss here includes the path loss between the primary user and the secondary system, between the secondary system and the secondary system, and between the secondary system and the secondary user. The present disclosure provides a method capable of accurately calculating path loss.

According to the embodiments of the present disclosure, a secondary system may be selected in the overlapping area of different spectrum management devices to transmit a signal, and all or a part of the secondary users managed by the different spectrum management devices receive the signal transmitted by the secondary system. Next, the secondary user who receives the signal can report the location information and the strength information of the received signal to the spectrum management device that manages the secondary user. As a result, the spectrum management device can accurately fit the radio wave propagation path loss index in the coexistence system according to the location information and the received signal strength information of the secondary user who receives signal, thus various path losses information in the coexistence system can be accurately determined.

In other words, the spectrum management device 200 can receive the location information and the received signal strength of the secondary user from the secondary user within its service range to determine the radio wave propagation path loss index in the coexistence system. The received signal strength here refers to the signal strength of the signal from the secondary system received by the secondary user, and the secondary system may be a secondary system other than the secondary system managed by the spectrum management device 200.

As described above, according to the embodiments of the present disclosure, various path loss information in the coexistence system can be accurately determined, thereby the value of each performance parameter required for determining the system total utility is calculated more accurately, making the system total utility more accurate.

Figure 5 is a schematic diagram showing coloring multiple reconciliation solutions shown in Figure 4 and calculating the system total utility according to an embodiment of the present disclosure. As shown in Figure 5, the calculation unit 260 may calculate that the system total utility of the interference overlapping graph corresponding to the reconciliation solution 1 is 0.8, and the system total utility of the interference overlapping graph corresponding to the reconciliation solution 2 is 0.7, and the system total utility of the interference overlapping graph corresponding to the reconciliation solution 3 is 0.9, and the system total utility of the interference overlapping graph corresponding to the reconciliation solution 4 is 0.8, according to the method described above, for example.

According to an embodiment of the present disclosure, the processing unit 240 may determine a final reconciliation solution according to multiple reconciliation solutions of the interference overlapping graph based on the system total utility of the coexistence system. The processing unit 240 according to an embodiment of the present disclosure will be explained in detail below.

According to an embodiment of the present disclosure, the processing unit 240 may select a reconciliation solution with largest system total utility from among multiple reconciliation solutions as the final reconciliation solution.

As mentioned above, the parameters considered in the system total utility calculation method of the spectrum management device 200 and the weight $w_i$ of each parameter may be determined according to the service type supported by the spectrum management device 200. That is to say, for different spectrum management devices, the parameters considered when calculating the system total utility may be different, that is, the formulas used may be different. According to an embodiment of the present disclosure, the spectrum management device 200 can obtain the system total utility calculation method of other spectrum management devices through the communication unit 220, thereby determining whether the system total utility calculation method of other spectrum management devices and the system total utility calculation method of the spectrum management device 200 are consistent.

Further, according to an embodiment of the present disclosure, when the system total utility calculation method of the other spectrum management device is consistent with the system total utility calculation method of the spectrum management device 200, the calculation unit 260 may calculate the system total utility of each of the multiple reconciliation solutions using the system total utility calculation method of the spectrum management device 200 (in fact, the system total utility calculation method of other spectrum management devices). Further, the processing unit 240 may directly select the reconciliation solution with largest system total utility as the final reconciliation solution according to the calculation result of the calculation unit 260.

Figure 6 is a schematic diagram showing a final reconciliation solution determined by the multiple reconciliation solutions shown in Figure 5 according to an embodiment of the present disclosure. As shown in Figure 6, the processing unit 240 may select the reconciliation solution 3 with largest system total utility as the final reconciliation solution.

According to an embodiment of the present disclosure, when the method of calculating the system total utility by the spectrum management device 200 and the method of calculating the system total utility by other spectrum management devices are inconsistent, the processing unit 240 may determine the final reconciliation solution in the following manner.

According to an embodiment of the present disclosure, the calculation unit 260 may also calculate the system total utility of each of the multiple reconciliation solutions using the system total utility calculation method of the spectrum management device 200, and then the processing unit 240 selects the first reconciliation solution from among the multiple reconciliation solutions. For example, the processing unit 240 may select, as the first reconciliation solution, the reconciliation solution with largest system total utility calculated using the system total utility calculation method of the spectrum management device 200.

Further, according to an embodiment of the present disclosure, the calculation unit 260 may obtain the system total utility calculation method of other spectrum management devices through the communication unit 220, and then may calculate the system total utility of each of the multiple reconciliation solutions using the system total utility calculation method of other spectrum management devices, and then the processing unit 240 selects other reconciliation solutions from among the multiple reconciliation solutions. For example, the processing unit 240 may select, from among the multiple reconciliation solutions, the reconciliation solution with largest system total utility calculated by the system total utility calculation method of other spectrum management devices as the other reconciliation solution. Here, there may be one or more other reconciliation solutions, and the number of other reconciliation solutions may be the same as the number of other spectrum management devices. For example, when there are two other spectrum management devices, denoted as spectrum management device A and spectrum management device B, respectively, the calculation unit 260 may calculate the system total utility of each of the multiple reconciliation solutions using the system total utility calculation method of spectrum management device A, and then the processing unit 240 selects one other reconciliation solution (referred to as the second reconciliation solution). Further, the calculation unit 260 may calculate the system total utility of each of the multiple reconciliation solutions using the system total utility calculation method of the spectrum management device B, and then the processing unit 240 selects another other reconciliation solution (referred to as the third reconciliation solution). Therefore, there are two other reconciliation solutions determined by the processing unit 240.

According to an embodiment of the present disclosure, the processing unit 240 may determine a final reconciliation solution according to the first reconciliation solution and other reconciliation solutions.

According to an embodiment of the present disclosure, for a side on which judgments by the first reconciliation solution and other reconciliation solutions are consistent, the processing unit 240 may determine a judgment on the side to be consistent with the judgments by the first reconciliation solution and the other reconciliation solutions.

According to an embodiment of the present disclosure, for a side on which judgment by the first reconciliation solution and the other reconciliation solutions are inconsistent, the processing unit 240 may determine the judgment on the side according to interference suffered by the primary user in the coexistence system. In an example, the processing unit 240 may respectively calculate the interference suffered by the primary user in the case of adopting the first reconciliation solution and one or more other reconciliation solutions, and may determine the reconciliation solution with less interference suffered by the primary user as the final reconciliation solution. In other words, the final reconciliation solution is the one in which the interference suffered by the primary user is less of the first reconciliation solution and the other reconciliation solutions.

According to an embodiment of the present disclosure, for a side on which judgments by the first reconciliation solution and other reconciliation solutions are inconsistent, the processing unit 240 may also determine the judgment on the side according to the priority of the spectrum management device 200 and other spectrum management devices. In an example, the processing unit 240 may adopt the same judgment as the spectrum management device with a higher priority.

According to an embodiment of the present disclosure, for an side on which judgments by the first reconciliation solution and other reconciliation solutions are inconsistent, the processing unit 240 may also determine the judgment on the side according to the rotation sequence of the spectrum management device 200 and other spectrum management devices. That is, all spectrum management devices in the coexistence system can take turns to make a final judgment on the side on which judgment is inconsistent. For example, in the case of a coexistence system including a spectrum management device 200 and two other spectrum management devices, for this resource allocation, the judgment by the spectrum management device 200 is adopted, and for the next resource allocation, the judgment by one of the other spectrum management device is adopted, and for the next resource allocation, the judgment by another one of the other spectrum management device is adopted.

According to an embodiment of the present disclosure, the judgment manner of the processing unit 240 for the side on which the judgment is not consistent is explained in a non-limiting manner on the above. According to an embodiment of the present disclosure, the processing unit 240 can flexibly use the above-mentioned judgment method. For example, for the side on which judgments are inconsistent, the processing unit 240 may first calculate the interference suffered by the primary user in the case of adopting the first reconciliation solution and one or more other reconciliation solutions. When the interference suffered by the primary user is the same or similar in the case of adopting the first reconciliation solution and one or more other reconciliation solutions, the processing unit 240 may determine the judgment on the side according to the priority of the spectrum management device 200 and other spectrum management devices, or determine the judgment on the side according to the rotation sequence of the spectrum management device 200 and other spectrum management devices.

As described above, the processing unit 240 may determine the final reconciliation solution according to the judgments on all sides (including the sides on which judgments are consistent and the sides on which judgments are inconsistent).

As described above, the final reconciliation solution of the interference overlapping graph of the coexistence system may be determined by the spectrum management device 200. Here, the spectrum management device 200 may be a spectrum management device responsible for decision-making in the coexistence system (may also be referred to as a managing spectrum management device). That is, in the coexistence system, it is agreed in advance that the interference overlapping graph of the coexistence system is decided by the spectrum management device 200. For example, the spectrum management device 200 may be a spectrum management device with a relatively central location, better performance, or more managed secondary systems in a coexistence system, which is not limited in the present disclosure. However, in actual scenarios, there may not be a spectrum management device responsible for decision-making in the coexistence system. Such case will be described in detail below.

According to an embodiment of the present disclosure, the calculation unit 260 may calculate the system total utility of each of the multiple reconciliation solutions using the system total utility calculation method of the spectrum management device 200, and the processing unit 240 may select the first reconciliation solution with largest system total utility from among the multiple reconciliation solutions. It is assumed here that the system total utility of the first reconciliation solution is Umaxi.

According to an embodiment of the present disclosure, the spectrum management device 200 may send the interference overlapping graph generated by the spectrum management device 200 to each of the other spectrum management devices through the communication unit 220 for selecting other reconciliation solutions by the other spectrum management devices. Here, the process of selecting other reconciliation solutions by other spectrum management devices is similar to the process of selecting the first reconciliation solution by the spectrum management device 200. For example, other spectrum management devices can calculate the system total utility of each of the multiple reconciliation solutions using the system total utility calculation method of other spectrum management devices, and can select other reconciliation solutions with largest system total utility from among the multiple reconciliation solutions. It is assumed here that there is only one other spectrum management device, and the system total utility of other reconciliation solution determined by the other spectrum management devices is $U_{max2}$.

Further, according to an embodiment of the present disclosure, the processing unit 240 may determine the final reconciliation solution according to the first reconciliation solution as determined above and other reconciliation solution selected by other spectrum management device.

According to an embodiment of the present disclosure, when the system total utility calculation method of the spectrum management device 200 is consistent with that of other spectrum management device, the spectrum management device 200 can receive the system total utility of other reconciliation solution determined by the other spectrum management device through the communication unit 220. Further, the spectrum management device 200 may also send the system total utility of the first reconciliation solution to other spectrum management device for determining the final reconciliation solution by the other spectrum management device. Next, the processing unit 240 may compare the system total utility of the first reconciliation solution with the system total utility of other reconciliation solution, and then select the reconciliation solution with largest system total utility from the first reconciliation solution and other reconciliation solution as the final reconciliation solution. For example, when Umaxi > $U_{max2}$, the processing unit 240 may determine the first reconciliation solution as the final reconciliation solution, and vice versa, may determine other reconciliation solution as the final reconciliation solution.

Further, when the final reconciliation solution selected by the processing unit 240 is the other reconciliation solution, the spectrum management device 200 may also receive other reconciliation solution from other spectrum management device. When the final reconciliation solution selected by the processing unit 240 is the first reconciliation solution, the spectrum management device 200 may also send the first reconciliation solution to other spectrum management device.

According to an embodiment of the present disclosure, when the system total utility calculation method of the spectrum management device 200 is inconsistent with that of the other spectrum management device, the spectrum management device 200 may receive other reconciliation solution determined by other spectrum management device through the communication unit 220. Further, the spectrum management device 200 may also send the first reconciliation solution to other spectrum management device. Next, the processing unit 240 may determine a final reconciliation solution according to the first reconciliation solution and other reconciliation solution.

According to an embodiment of the present disclosure, for a side on which judgments by the first reconciliation solution and other reconciliation solutions are consistent, the processing unit 240 may determine judgments on the side to be consistent with the judgments by the first reconciliation solution and the other reconciliation solutions.

According to an embodiment of the present disclosure, for a side on which judgments by the first reconciliation solution and other reconciliation solutions are inconsistent, the processing unit 240 may determine the judgment on the side according to the interference suffered by the primary user in the coexistence system. Here, the processing unit 240 may calculate the interference suffered by the primary user in the coexistence system when the first reconciliation solution is adopted. Further, the spectrum management device 200 may send the interference suffered by the primary user in the coexistence system when the first reconciliation solution is adopted to other spectrum management devices. Similarly, other spectrum management devices can also calculate the interference suffered by the primary user in the coexistence system when other reconciliation solutions are adopted, thus the spectrum management device 200 can receive the interference suffered by the primary user in the coexistence system when other reconciliation solutions are adopted. According to an embodiment of the present disclosure, the processing unit 240 may compare the interference suffered by the primary user in the coexistence system when the first reconciliation solution is adopted and the interference suffered by the primary user in the coexistence system when other reconciliation solutions are adopted, and select the reconciliation solution in which the interference suffered by the primary user is relatively small.

According to an embodiment of the present disclosure, for a side on which judgments by the first reconciliation solution and other reconciliation solutions are inconsistent, the processing unit 240 may also determine the judgment on the side according to the priority of the spectrum management device 200 and other spectrum management devices. In an example, the processing unit 240 may adopt the same judgment as the spectrum management device with a higher priority.

According to an embodiment of the present disclosure, for a side on which judgments by the first reconciliation solution and other reconciliation solutions are inconsistent, the processing unit 240 may also determine the judgment on the side according to the rotation sequence of the spectrum management device 200 and other spectrum management devices. In other words, all spectrum management devices in the coexistence system can take turns to make a final judgment on the side on which judgments are inconsistent. For example, in the case of a coexistence system including a spectrum management device 200 and two other spectrum management devices, for this resource allocation, the judgment by the spectrum management device 200 is adopted, and for the next resource allocation, a judgment by one of the other spectrum management device is adopted, and for the next resource allocation, the judgment by another one of the other spectrum management device is adopted..

Similarly, as described above, the processing unit 240 can flexibly use the above-mentioned judgment manner. For example, for a side on which judgments are inconsistent, the processing unit 240 may first compare the interference suffered by the primary user in the coexistence system when the first reconciliation solution is adopted and the interference suffered by the primary user in the coexistence system when other reconciliation solutions are adopted. When the interference suffered by the primary user is the same or similar in the case of adopting the first reconciliation solution and one or more other reconciliation solutions, the processing unit 240 can determine the judgment on the side according to the priority of the spectrum management device 200 and other spectrum management devices, or determine the judgment on the side according to the rotation sequence of the spectrum management device 200 and other spectrum management devices.

As described above, the processing unit 240 may determine the final reconciliation solution according to the judgments on all sides (including the sides on which judgments are consistent and the sides on which judgments are inconsistent).

As described above, the spectrum management device 200 can determine the final reconciliation solution of the interference overlapping graph of the coexistence system.

As shown in Figure 2, according to an embodiment of the present disclosure, the spectrum management device 200 may further include an allocation unit 270 for determining a spectrum allocation solution of the coexistence system according to the final reconciliation solution, the spectrum allocation solution including spectrum resource allocated to each secondary system of the coexistence system. Here, when the spectrum management device 200 determines the final reconciliation solution, the interference relationship between the secondary systems in the coexistence system is actually determined, and then the spectrum allocation solution of the coexistence system may be determined using a method common in the art. For example, the spectrum management device 200 may color the interference overlapping graph corresponding to the final reconciliation solution and determine the spectrum resources allocated to the secondary system managed by each spectrum management device, and this process is not limited in the present disclosure.

According to an embodiment of the present disclosure, in a case that the final reconciliation solution is determined by the spectrum management device 200, the spectrum management device 200 may send the final reconciliation solution of the coexistence system to the other spectrum management device.

According to an embodiment of the present disclosure, the allocation unit 270 may allocate spectrum resources to the secondary system managed by the spectrum management device according to the spectrum allocation solution of the coexistence system.

As described above, according to an embodiment of the present disclosure, spectrum resources may be allocated to the coexistence system according to the interference overlapping graph reconciled by multiple spectrum management devices, so as to perform consistent spectrum allocation in the coexistence system while ensuring that the system total utility is optimal.

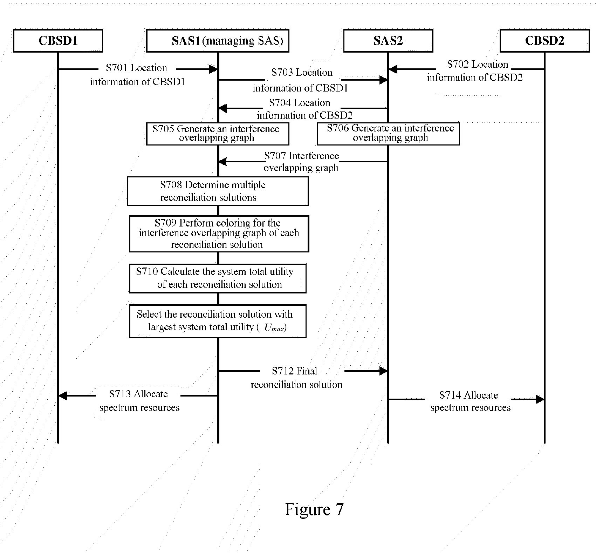

Figures 7 to 10 are signaling flowcharts showing a spectrum management method according to an embodiment of the present disclosure. In Figures 7 to 10, it is assumed that the coexistence system includes two spectrum management devices: SAS1 and SAS2, and the secondary system managed by SAS1 is explained taking CBSD1 as an example, and the secondary system managed by SAS2 is explained taking CBSD2 as an example.

In Figure 7, SAS1 is the SAS responsible for decision-making, that is, the managing SAS, and SAS1 and SAS2 have consistent method of calculating the system total utility. In step S701, CBSD1 sends the location information of CBSD1 to SAS1. Optionally, information such as power information may also be included. In step S702, CBSD2 sends the location information of CBSD2 to SAS2. Optionally, information such as power information may also be included. Next, in step S703, SAS1 sends the location information of CBSD1 to SAS2. In step S704, SAS2 sends the location information of CBSD2 to SAS1. Next, in step S705, SAS1 generates an interference overlapping graph of the coexistence system. In step S706, SAS2 generates an interference overlapping graph of the coexistence system. Next, in step S707, SAS2 sends the generated interference overlay graph to SAS1. Next, in step S708, SAS1 determines multiple reconciliation solutions based on the two interference overlapping graphs. Next, in step S709, SAS1 performs coloring for the interference overlapping graph of each reconciliation solution. Next, in step S710, SAS1 calculates the system total utility of each reconciliation solution using the method of SAS1 calculating the system total utility. Next, in step S711, SAS1 selects the reconciliation solution with largest system total utility as the final reconciliation solution. Next, in step S712, SAS1 sends the final reconciliation solution to SAS2. Next, in step S713, SAS1 determines the spectrum allocation solution of the coexisting system using the final reconciliation solution, and allocates spectrum resources to the secondary system managed by SAS1. Next, in step S714, SAS2 determines the spectrum allocation solution of the coexisting system using the final reconciliation solution, and allocates spectrum resources to the secondary system managed by SAS2. As a result, SAS1 and SAS2 allocate resources to the secondary systems in the coexisting system using the reconciled interference overlapping graph.

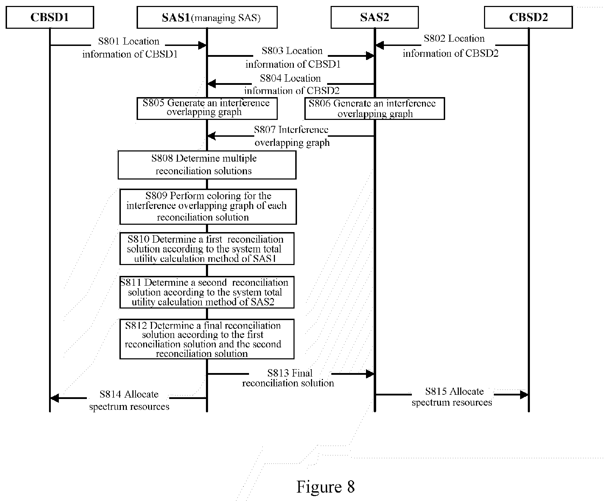

In Figure 8, SAS1 is the SAS responsible for decision-making, that is, managing SAS, and SAS1 and SAS2 have inconsistent methods of calculating the system total utility. In step S801, CBSD1 sends the location information of CBSD1 to SAS1. Optionally, information such as power information may also be included. In step S802, CBSD2 sends the location information of CBSD2 to SAS2. Optionally, information such as power information may also be included. Next, in step S803, SAS1 sends the location information of CBSD1 to SAS2. In step S804, SAS2 sends the location information of CBSD2 to SAS1. Next, in step S805, SAS1 generates an interference overlapping graph of the coexistence system. In step S806, SAS2 generates an interference overlapping graph of the coexistence system. Next, in step S807, SAS2 sends the generated interference overlay to SAS1. Next, in step S808, SAS1 determines multiple reconciliation solutions based on the two interference overlapping graphs. Next, in step S809, SAS1 performs coloring for the interference overlapping graph of each reconciliation solution. Next, in step S810, SAS1 calculates the system total utility of each reconciliation solution using the method of SAS1 calculating the system total utility, and determines the first reconciliation solution. Next, in step S811, SAS1 calculates the system total utility of each reconciliation solution using the method of SAS2 calculating the system total utility, and determines the second reconciliation solution. Next, in step S812, the SAS1 determines the final reconciliation solution according to the first reconciliation solution and the second reconciliation solution. Next, in step S813, SAS1 sends the final reconciliation solution to SAS2. Next, in step S814, SAS1 determines the spectrum allocation solution of the coexistence system using the final reconciliation solution, and allocates spectrum resources to the secondary system managed by SAS1. Next, in step S815, SAS2 determines the spectrum allocation solution of the coexistence system using the final reconciliation solution, and allocates spectrum resources to the secondary system managed by SAS2. As a result, SAS1 and SAS2 allocate resources to the secondary systems in the coexisting system using the reconciled interference overlapping graphs.

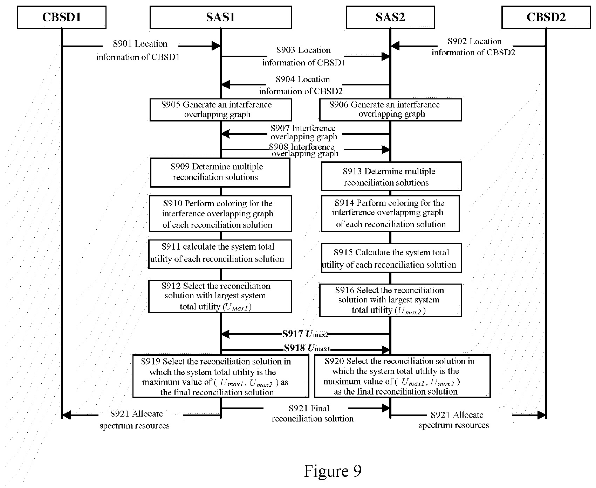

In Figure 9, there is no SAS responsible for decision-making in the coexistence system, and SAS1 and SAS2 have consistent method of calculating the system total utility. In step S901, CBSD1 sends the location information of CBSD1 to SAS1. Optionally, information such as power information may also be included. In step S902, CBSD2 sends the location information of CBSD2 to SAS2. Optionally, information such as power information may also be included. Next, in step S903, SAS1 sends the location information of CBSD1 to SAS2. In step S904, SAS2 sends the location information of CBSD2 to SAS1. Next, in step S905, SAS1 generates an interference overlapping graph of the coexistence system. In step S906, SAS2 generates an interference overlapping graph of the coexistence system. Next, in step S907, SAS2 sends the generated interference overlapping graph to SAS1. Next, in step S908, SAS1 sends the generated interference overlapping graph to SAS2. Next, in step S909, SAS1 determines multiple reconciliation solutions based on the two interference overlapping graphs. Next, in step S910, SAS1 performs coloring for the interference overlapping graph of each reconciliation solution. Next, in step S911, SAS1 calculates the system total utility of each reconciliation solution using the method of SAS1 calculating the system total utility. Next, in step S912, SAS1 selects the reconciliation solution with largest system total utility, and the system total utility of the reconciliation solution is $U_{max1}$. In step S913, SAS2 determines multiple reconciliation solutions based on the two interference overlapping graphs. Next, in step S914, SAS2 performs coloring for the interference overlapping graph of each reconciliation solution. Next, in step S915, SAS2 calculates the system total utility of each reconciliation solution using the method of SAS2 calculating the system total utility. Next, in step S916, SAS2 selects the reconciliation solution with largest system total utility, and the system total utility of the reconciliation solution is $U_{max2}$. Next, in step S917, SAS2 sends $U_{max2}$ to SAS1. Next, in step S918, SAS1 sends Umaxi to SAS2. Next, in step S919, SAS1 selects the reconciliation solution with the maximum value of Umaxi and $U_{max2}$ as the final reconciliation solution. Similarly, in step S920, SAS2 selects the reconciliation solution of the maximum value of Umaxi and $U_{max2}$ as the final reconciliation solution. It is assumed here that Umaxi is the maximum value of Umaxi and $U_{max2}$, and in step S921, SAS1 sends the final reconciliation solution to SAS2. Next, in step S922, SAS1 determines the spectrum allocation solution of the coexistence system using the final reconciliation solution, and allocates spectrum resources to the secondary system managed by SAS1. Next, in step S923, SAS2 determines the spectrum allocation solution of the coexisting system using the final reconciliation solution, and allocates spectrum resources to the secondary system managed by SAS2. As a result, SAS1 and SAS2 allocate resources to the secondary systems in the coexisting system using the reconciled interference overlapping graph.

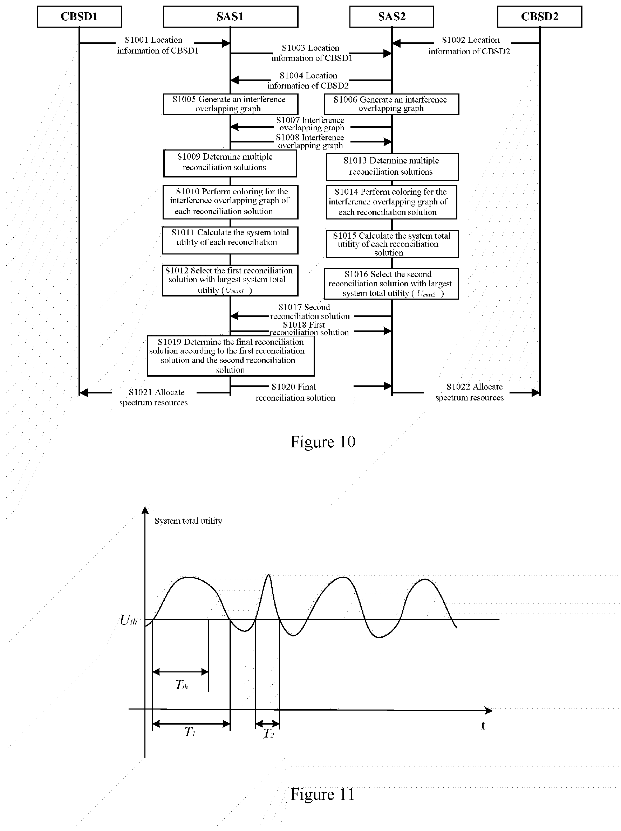

In Figure 10, there is no SAS responsible for decision-making in the coexistence system, and SAS1 and SAS2 have inconsistent methods of calculating the system total utility. In step S1001, CBSD1 sends the location information of CBSD1 to SAS1. Optionally, information such as power information may also be included. In step S1002, CBSD2 sends the location information of CBSD2 to SAS2. Optionally, information such as power information may also be included. Next, in step S1003, SAS1 sends the location information of CBSD1 to SAS2. In step S1004, SAS2 sends the location information of CBSD2 to SAS1. Next, in step S1005, SAS1 generates an interference overlapping graph of the coexistence system. In step S1006, SAS2 generates an interference overlapping graph of the coexistence system. Next, in step S1007, SAS2 sends the generated interference overlay to SAS1. Next, in step S1008, SAS1 sends the generated interference overlay to SAS2. Next, in step S1009, SAS1 determines multiple reconciliation solutions based on the two interference overlapping graphs. Next, in step S1010, SAS1 performs coloring for the interference overlapping graph of each reconciliation solution. Next, in step S1011, SAS1 calculates the system total utility of each reconciliation solution using the method of SAS1 calculating the system total utility. Next, in step S1012, SAS1 selects the reconciliation solution with largest system total utility as the first reconciliation solution. Next, in step S1013, SAS2 determines multiple reconciliation solutions based on the two interference overlapping graphs. Next, in step S1014, SAS2 performs coloring for the interference overlapping graph of each reconciliation solution. Next, in step S1015, SAS2 calculates the system total utility of each reconciliation solution using the method of SAS2 calculating the system total utility. Next, in step S1016, SAS2 selects the reconciliation solution with largest system total utility as the second reconciliation solution. Next, in step S1017, SAS2 sends the second reconciliation solution to SAS1. Next, in step S1018, SAS1 sends the first reconciliation solution to SAS2. It is assumed here that SAS1 is a spectrum management device with a higher priority, or it is currently SAS1's turn to make a decision, or the primary user suffers less interference when the first reconciliation solution is adopted. Next, in step S1019, the SAS1 determines the final reconciliation solution according to the first reconciliation solution and the second reconciliation solution. Next, in step S1020, SAS1 sends the final reconciliation solution to SAS2. Next, in step S1021, SAS1 determines the spectrum allocation solution of the coexistence system using the final reconciliation solution, and allocates spectrum resources to the secondary system managed by SAS1. Next, in step S1022, SAS2 determines the spectrum allocation solution of the coexistence system using the final reconciliation solution, and allocates spectrum resources to the secondary system managed by SAS2. As a result, SAS1 and SAS2 allocate resources to the secondary system in the coexisting system using the reconciled interference overlapping graph.

The spectrum allocation method according to the present disclosure is explained by taking Figures 7 to 10 as examples as above. Figures 7 to 10 only show the case where the coexistence system includes two spectrum management devices, but it is also suitable for the case where the coexistence system includes three or more spectrum management devices.

According to an embodiment of the present disclosure, the processing unit 240 may also determine the final reconciliation solution from among the multiple reconciliation solutions according to the magnitude of the system total utility and a duration for which the system total utility exceeds a predetermined threshold.

According to an embodiment of the present disclosure, the processing unit 240 may determine a final reconciliation solution according to a reconciliation solutions in which the duration for which the system total utility is higher than the system total utility threshold exceeds the hysteresis parameter threshold. Here, the duration for which the system total utility is higher than the system total utility threshold may be referred to as the hysteresis parameter.

Figure 11 is a schematic diagram showing a curve of the system total utility as a function of time according to an embodiment of the present disclosure. Figure 11 shows a curve of the system total utility of a reconciliation solution as a function of time t, where $U_{th}$ represents the system total utility threshold, and $T_{th}$ represents the hysteresis parameter threshold. As shown in Figure 11, for time $T_1$, the duration $T_1$ for which the system total utility is higher than the system total utility threshold $U_{th}$ exceeds the hysteresis parameter threshold $T_{th}$. Therefore, if the final reconciliation solution is determined at the end point of time T1, the reconciliation solution may be used as an alternative to the final reconciliation solution. For time T2, the duration T2 for which the system total utility is higher than the system total utility threshold $U_{th}$ does not exceed the hysteresis parameter threshold $T_{th}$. Therefore, if the final reconciliation solution is determined at the end point of time $T_2$, the reconciliation solution cannot be used as an alternative to the final reconciliation solution.

According to an embodiment of the present disclosure, the processing unit 240 may calculate the hysteresis parameter and determine whether the hysteresis parameter exceeds the hysteresis parameter threshold in the case of determining the final reconciliation solution and/or determining the first reconciliation solution. For example, in the example shown in Figure 7, in step S711, the processing unit 240 may select the reconciliation solution with largest system total utility and the hysteresis parameter exceeding the hysteresis parameter threshold as the final reconciliation solution. In the example shown in Figure 8, in step S810, the processing unit 240 may select the reconciliation solution with largest system total utility and the hysteresis parameter exceeding the hysteresis parameter threshold as the first reconciliation solution according to the system total utility calculation method of SAS1, and in step S811, the processing unit 240 may select the reconciliation solution with largest system total utility and the hysteresis parameter exceeding the hysteresis parameter threshold as the second reconciliation solution according to the system total utility calculation method of SAS2. In the example shown in Figure 9, in step S912, the processing unit 240 may select the reconciliation solution with largest system total utility and the hysteresis parameter exceeding the hysteresis parameter threshold as the first reconciliation solution, and in step S916, SAS2 may select the reconciliation solution with largest system total utility and the hysteresis parameter exceeding the hysteresis parameter threshold as the second reconciliation solution. In the example shown in Figure 10, in step S1012, the processing unit 240 may select the reconciliation solution with largest system total utility and the hysteresis parameter exceeding the hysteresis parameter threshold as the first reconciliation solution, and in step S1016, SAS2 may select the reconciliation solution with largest system total utility and the hysteresis parameter exceeding the hysteresis parameter threshold as the second reconciliation solution.

As described above, according to the embodiments of the present disclosure, an appropriate hysteresis parameter threshold may be selected so that the hysteresis parameter of the final reconciliation solution determined exceeds the hysteresis parameter threshold. In this way, the final reconciliation solution is a relatively stable reconciliation solution, so as to avoid frequent replacement of the reconciliation solution.

As described above, the processing unit 240 may select the final reconciliation solution or the first reconciliation solution from among the multiple reconciliation solutions of the interference overlapping graph according to the system total utility calculation method of the SAS1. Optionally, the processing unit 240 may also select the second reconciliation solution from among the multiple reconciliation solutions of the interference overlapping graph according to the system total utility calculation method of SAS2. In such a process, the processing unit 240 may perform the process of selection using a genetic algorithm.

As we all know, the basic principle of the genetic algorithm is to select an individual with the best fitness among all individuals in each generation, and the processing unit 240 of the present disclosure needs to select a reconciliation solution with the best total utility among $2^N$ reconciliation solutions ( It is assumed that the number of sides with differences between the interference overlapping graphs generated by different spectrum management devices is N). According to an embodiment of the present disclosure, the calculation formula of the system total utility may be corresponded to the fitness parameter in the genetic algorithm, and the $2^N$ reconciliation solutions may be corresponded to all the individuals of a generation in the genetic algorithm, thus the process of selection is performed using the genetic algorithm.

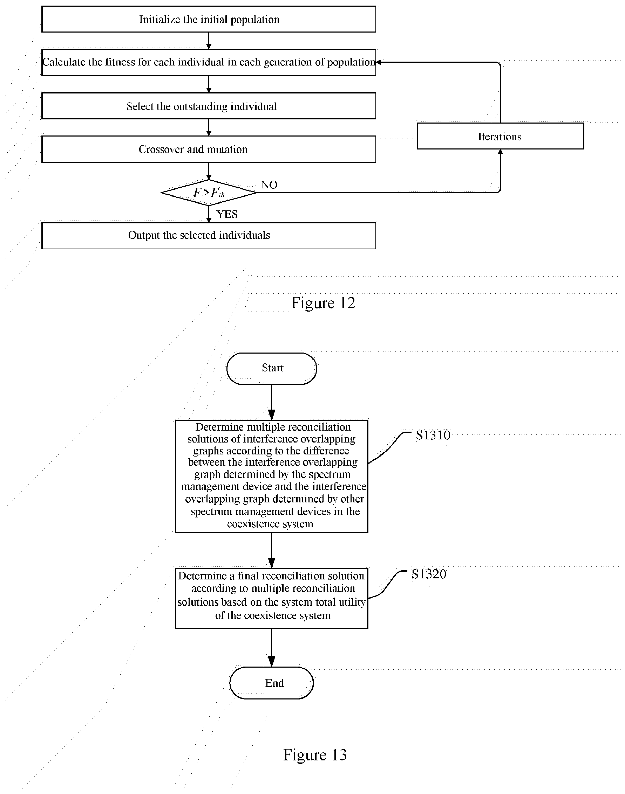

Figure 12 is a flowchart illustrating a method of selecting a reconciliation solution using a genetic algorithm according to an embodiment of the present disclosure. As shown in Figure 12, the initial population is first generated, where the initial population is randomly generated among $2^N$ individuals. Then the fitness F of each individual in each generation of the population is calculated, where the fitness F corresponds to the system total utility calculation formula. Next, the individual with the outstanding fitness F is selected. Next, the crossover and mutation process are performed to generate new individuals, the generated individuals are merged with the individuals in the previous generation of the population, and then several individuals with the total utility value ranked ahead is taken as the new population. The number of the new population is the same as that of the initial population. Next, whether the fitness of the outstanding individual exceeds the fitness threshold $F_{th}$ is determined, if so, the selected individual is output, and the output outstanding individual is decoded into the corresponding interference overlapping graph, otherwise, the iterative process is performed until the outstanding individual is selected.

The pseudo code for selecting a reconciliation solution using a genetic algorithm according to an embodiment of the present disclosure is as follows.

```
initialize the initial population
  for i=1:iterations
    calculate the fitness value for each individual
    select the outstanding individuals
    crossover
    mutation
    update the new population
  end
selected the best individual
decoding
```

Among them, "initialize the initial population" means that the population is initialized, that is, the initial population of popsize individuals is selected, and the initial population is randomly selected from $2^N$ individuals. For the individuals in each generation of the population, "calculate the fitness value for each individual" means that the system total utility value for each individual in each generation of the population is calculated, and "select the outstanding individuals" means that the outstanding individual is selected. "Crossover" means that the chromosomes of different individuals in the population cross to generate new individuals. "Mutation" means that chromosomes of individuals in the population mutate to generate new individuals. "Update the new population" means that the population is updated by new individuals, and the number of individuals in the updated population is also popsize. "Select the best individual" means that the individual with largest system total utility is selected. "Decoding" means that the outstanding individual is decoded into the corresponding interference overlapping graph.

As described above, according to the embodiments of the present disclosure, a reconciliation solution may be selected using the genetic algorithm by reasonably adjusting the number of iterations, thereby significantly reducing the amount of calculation and reducing the complexity of the algorithm.

According to an embodiment of the present disclosure, the determination unit 230 may further optimize the sides with difference after determining the sides with differences between the interference overlapping graph generated by the spectrum management device 200 and the interference overlapping graphs generated by other spectrum management devices. For example, the determination unit 230 may determine multiple reconciliation solutions only according to the sides satisfying a predetermined condition among the sides with differences.

According to an embodiment of the present disclosure, the predetermined condition may be determined according to the degrees of the two points connected by the side and/or the influence of the side on computing the system total utility. For example, the predetermined condition may be: the average value of the degrees of the two points connected by the side is greater than a predetermined threshold; the maximum value of the degrees of the two points connected by the side is greater than a predetermined threshold; the influence of the side on the system total utility is greater than a predetermined threshold, and so on. Here, the degree of a point refers to the number of sides including the point in the interference overlapping graph. Of course, the predetermined conditions may also be other conditions.

As described above, according to an embodiment of the present disclosure, the number of multiple reconciliation solutions may be reduced by excluding some sides with characteristics or sides that have a small impact on the system total utility from the sides with differences. In this way, the amount of calculation can also be significantly reduced, and the complexity of the algorithm can be reduced.

It can be seen that, according to an embodiment of the present disclosure, multiple reconciliation solutions may be determined according to the difference between multiple interference overlapping graphs generated by multiple spectrum management devices, and the final resolution may be determined based on the system total utility of the coexistence system. Reconciliation solution. In this way, the reconciliation of multiple spectrum allocation solutions may be carried out while ensuring the system total utility is optimal, thereby performing consistent spectrum allocation in a coexistence system. In the present disclosure, different situations where there is a spectrum management device that makes decisions and where there is no spectrum management device that makes decisions in a coexistence system are also considered, so that the spectrum management device and the spectrum management method may be applied to various systems. In addition, the present disclosure also considers the inconsistency of the system total utility calculation methods of different spectrum management devices. Further, the hysteresis parameter of the reconciliation solution may be calculated to increase the stability of the selected reconciliation solution. Further, the amount of calculation can be reduced by excluding some sides with characteristics or sides that have a small impact on the system total utility from the sides with differences. Further, in the process of selecting a reconciliation solution, the amount of calculation can be significantly reduced and the complexity of the algorithm is reduced using genetic algorithms.

<3. Embodiment of spectrum management method>

Next, the spectrum management method performed by the spectrum management device 200 in the coexistence system according to an embodiment of the present disclosure will be described in detail.

Figure 13 is a flowchart illustrating a spectrum management method performed by the spectrum management device 200 according to an embodiment of the present disclosure.

As shown in Figure 13, in step S1310, multiple reconciliation solutions of interference overlapping graphs are determined according to the difference between the interference overlapping graph determined by the spectrum management device 200 and the interference overlapping graph determined by other spectrum management devices in the coexistence system.

Next, in step S1320, a final reconciliation solution is determined according to multiple reconciliation solutions based on the system total utility of the coexistence system .

Preferably, determining multiple reconciliation solutions in step S1310 includes: determining the sides with difference according to the interference overlapping graph determined by the spectrum management device 200 and the interference overlapping graph determined by other spectrum management devices; and determining multiple reconciliation solutions according to the sides with differences.

Preferably, the spectrum management method further includes: with respect to the interference overlapping graph corresponding to each of the multiple reconciliation solutions, performing coloring for the interference overlapping graph, such that points with side connections have different colors and points without side connection have the same colors; and determining the system total utility of the interference overlapping graph according to the colored interference overlapping graph.

Preferably, determining the final reconciliation solution in step S1320 includes: selecting, as the final reconciliation solution, a reconciliation solution with largest system total utility from among the multiple reconciliation solutions.

Preferably, determining the final reconciliation solution in step S1320 includes: selecting a first reconciliation solution from among the multiple reconciliation solutions using the system total utility calculation method of the spectrum management device; selecting other reconciliation solutions from among the multiple reconciliation solutions using the system total utility calculation method of other spectrum management devices; and determining the final reconciliation solution according to the first reconciliation solution and the other reconciliation solutions.

Preferably, selecting the first reconciliation solution includes: selecting, as the first reconciliation solution, a reconciliation solution with largest system total utility from among the multiple reconciliation solutions using the system total utility calculation method of the spectrum management device, and wherein, selecting other reconciliation solutions including: selecting, as the other reconciliation solution, reconciliation solution with largest system total utility from among the multiple reconciliation solutions using the system total utility calculation method of the other spectrum management devices.

Preferably, determining the final reconciliation solution in step S1320 includes: selecting a first reconciliation solution with largest system total utility from among the multiple reconciliation solutions; and determining the final reconciliation solutions according to the first reconciliation solution and the other reconciliation solution selected by the other spectrum management devices.

Preferably, determining the final reconciliation solution in step S1320 includes: selecting, as the final reconciliation solution, a reconciliation solution with largest system total utility from among the first reconciliation solution and the other reconciliation solutions .

Preferably, determining the final reconciliation solution in step S1320 includes: for a side on which judgments by the first reconciliation solution and other reconciliation solutions are consistent, determining a judgment on the side to be consistent with the judgments by the first reconciliation solution and the other reconciliation solution; for a side on which judgments by the first reconciliation solution and the other reconciliation solutions are inconsistent, determining a judgment on the side according to interference suffered by a primary user in the coexistence system; and determining the final reconciliation solution according to the judgment on all the sides.

Preferably, determining the final reconciliation solution in step S1320 includes: determining the final reconciliation solution from among the multiple reconciliation solutions according to the magnitude of the system total utility and a duration for which the system total utility exceeds a predetermined threshold.

Preferably, the spectrum management method further includes: determining the interference overlapping graph according to all secondary systems in the coexistence system, where points in the interference overlapping graph represent secondary systems, and a side between two points represents that there is an interference between two secondary systems corresponding to the two points.

Preferably, the spectrum management method further includes: determining the system total utility of the coexistence system according to one or more of the following parameters: cumulative interference suffered by a primary user in the coexistence system, cumulative interference suffered by a secondary user in the coexistence system, the amount of rollback of transmission power of the secondary user in the coexistence system, spectrum utilization efficiency of the coexistence system, performances of uplinks of the coexistence system, performance of downlinks of the coexistence system, a network capacity of the coexistence system and system total overhead of the coexistence system.

Preferably, the spectrum management method further includes: determining a spectrum allocation solution of the coexistence system according to the final reconciliation solution, where the spectrum allocation solution includes spectrum resources allocated to each of secondary systems in the coexistence system.

Preferably, the spectrum management method further includes: sending the final reconciliation solution to other spectrum management devices.

Preferably, the spectrum management method further includes: allocating spectrum resources to the secondary system managed by the spectrum management device according to the spectrum allocation solution of the coexistence system.

According to an embodiment of the present disclosure, the subject that performs the above method may be the spectrum management device 200 according to an embodiment of the present disclosure, and thus all the foregoing embodiments of the spectrum management device 200 are suitable for this embodiment.

<4. Application example>

The technology of the present disclosure may be applied to various products.

For example, the spectrum management device 200 may be implemented as any type of server, such as a tower server, a rack server, and a blade server. The spectrum management device 200 and the electronic apparatus 1000 may be a control module (such as an integrated circuit module including a single chip, and a card or a blade inserted into a slot of a blade server) installed on a server.

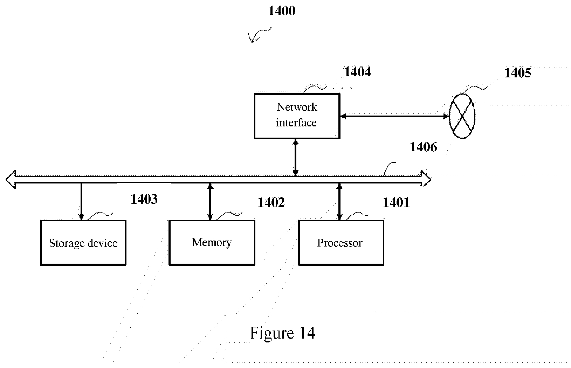

Figure 14 is a block diagram showing an example of a server 1400 that can implement the spectrum management device 200 according to the present disclosure. The server 1400 includes a processor 1401, a memory 1402, a storage device 1403, a network interface 1404, and a bus 1406.

The processor 1401 may be, for example, a central processing unit (CPU) or a digital signal processor (DSP), and controls the functions of the server 1400. The memory 1402 includes random access memory (RAM) and read only memory (ROM), and stores data and programs executed by the processor 1401. The storage device 1403 may include a storage medium such as a semiconductor memory and a hard disk.

The network interface 1404 is a wired communication interface for connecting the server 1400 to the wired communication network 1405. The wired communication network 1405 may be a core network such as an Evolved Packet Core Network (EPC) or a Packet Data Network (PDN) such as the Internet.

The bus 1406 connects the processor 1401, the memory 1402, the storage device 1403, and the network interface 1404 to each other. The bus 1406 may include two or more buses (such as a high-speed bus and a low-speed bus) each of which has different speed.

In the server 1400 shown in Figure 14, the generation unit 210, the determination unit 230, the processing unit 240, the coloring unit 250, the calculation unit 260, and the distribution unit 270 described in Figure 2 may be implemented by the processor 1401, and the communication unit 220 described in Figure 2 may be implemented by the network interface 1404. For example, the processor 1401 may perform following functions: generating the interference overlapping graph, determining the multiple reconciliation solutions, determining the final reconciliation solution, performing coloring for the interference overlapping graph, calculating the system total utility of the interference overlapping graph, and allocating spectrum resources by executing instructions stored in the memory 1402 or the storage device 1403 .

Preferred embodiments of the present disclosure are described above with reference to the accompanying drawings, but the present disclosure is of course not limited to the above examples. Those skilled in the art may make various alternations and modifications within the scope of the appended claims, and it should be understood that these alternations and modifications shall naturally fall within the technical scope of the present disclosure.

For example, the units shown by a dotted line block in the functional block diagrams shown in the accompanying drawings all indicate that the functional units are optional in the corresponding device, and each optional functional unit may be combined in an appropriate manner to achieve required features.

For example, multiple functions included in one unit in the above embodiments may be implemented by separate devices. Alternatively, the multiple functions implemented by multiple units in the above embodiments may be implemented by separate devices, respectively. In addition, one of the above functions may be implemented by multiple units. Needless to say, such configurations are included in the technical scope of the present disclosure.

In this specification, the steps described in the flowchart include not only processing performed in the described order chronologically, but also processing performed in parallel or individually rather than necessarily chronologically. In addition, even in the steps processed chronologically, needless to say, the order may be changed appropriately.

Although the embodiments of the present disclosure have been described in detail in combination to the accompanying drawings above, it should be understood that the above-described embodiments are only used to explain the present disclosure, and are not constructed as the limitation to the present disclosure. Those skilled in the art can make various modifications and alternations onto the above embodiments without departing from the spirit and scope of the present disclosure. Therefore, the scope of the present disclosure is defined by only the appended claims and equivalent meanings thereof.

**Claims**

1. A spectrum management device in a coexistence system, comprising a processing circuitry configured to:

   determine a plurality of reconciliation solutions of an interference overlapping graph according to differences between an interference overlapping graph determined by the spectrum management device and an interference overlapping graph determined by other spectrum management device in the coexistence system; and
   determine a final reconciliation solution according to the plurality of reconciliation solutions based on system total utility of the coexistence system.

2. The spectrum management device according to claim 1, wherein the processing circuitry is further configured to:

   determine sides with differences according to the interference overlapping graph determined by the spectrum management device and the interference overlapping graph determined by other spectrum management device; and
   determine the plurality of reconciliation solutions according to the sides with differences.

3. The spectrum management device according to claim 1, wherein the processing circuitry is further configured to: with respect to an interference overlapping graph corresponding to each of the plurality of reconciliation solutions,

   perform coloring for the interference overlapping graph, such that points with side connection have different colors and points without side connection have same colors; and
   determine system total utility of the interference overlapping graph according to the colored interference overlapping graph.

4. The spectrum management device according to claim 1, wherein the processing circuitry is further configured to: select, as the final reconciliation solution, a reconciliation solution with largest system total utility from among the plurality of reconciliation solutions.

5. The spectrum management device according to claim 1, wherein the processing circuitry is further configured to:

   select a first reconciliation solution from among the plurality of reconciliation solutions using a system total utility calculation method of the spectrum management device;

select other reconciliation solution from among the plurality of reconciliation solutions using system total utility calculation method of the other spectrum management device; and
determine the final reconciliation solution according to the first reconciliation solution and the other reconciliation solution.

6.  The spectrum management device according to claim 5, wherein the processing circuitry is further configured to:

    select, as the first reconciliation solution, a reconciliation solution with largest system total utility from among the plurality of reconciliation solutions using the system total utility calculation method of the spectrum management device; and
    select, as the other reconciliation solution, reconciliation solutions with largest system total utility from among the plurality of reconciliation solutions using the system total utility calculation method of the other spectrum management device.

7.  The spectrum management device according to claim 1, wherein the processing circuitry is further configured to:

    select a first reconciliation solution with largest system total utility from among the plurality of reconciliation solutions; and
    determine the final reconciliation solution according to the first reconciliation solution and the other reconciliation solution selected by the other spectrum management device.

8.  The spectrum management device according to claim 7, wherein the processing circuitry is further configured to:
    select, as the final reconciliation solution, a reconciliation solution with largest system total utility from among the first reconciliation solution and the other reconciliation solution.

9.  The spectrum management device according to claim 5 or 7, wherein the processing circuitry is further configured to:

    for a side on which judgments by the first reconciliation solution and the other reconciliation solution are consistent, determine a judgment on the side to be consistent with the judgments by the first reconciliation solution and the other reconciliation solution;
    for a side on which judgments by the first reconciliation solution and the other reconciliation solutions are inconsistent, determine a judgment on the side according to interference suffered by a primary user in the coexistence system; and
    determine the final reconciliation solution according to the judgment on all the sides.

10. The spectrum management device according to claim 1, wherein the processing circuitry is further configured to:
    determine the final reconciliation solution from among the plurality of reconciliation solutions according to the magnitude of the system total utility and a duration for which the system total utility exceeds a predetermined threshold.

11. The spectrum management device according to claim 1, wherein the processing circuitry is further configured to:
    determine the interference overlapping graph according to all secondary systems in the coexistence system, where points in the interference overlapping graph represent secondary systems, and a side between two points represents that there is an interference between two secondary systems corresponding to the two points.

12. The spectrum management device according to claim 1, wherein the processing circuitry is further configured to determine the system total utility of the coexistence system according to one or more of the following parameters: cumulative interference suffered by a primary user in the coexistence system, cumulative interference suffered by a secondary user in the coexistence system, the amount of rollback of transmission power of the secondary user in the coexistence system, spectrum utilization efficiency of the coexistence system, performances of uplinks of the coexistence system, performance of downlinks of the coexistence system, a network capacity of the coexistence system and system total overhead of the coexistence system.

13. The spectrum management device according to claim 1, wherein the processing circuitry is further configured to:
    determine a spectrum allocation solution of the coexistence system according to the final reconciliation solution, where the spectrum allocation solution includes spectrum resources allocated to each of secondary systems in the coexistence system.

14. The spectrum management device according to claim 1, wherein the processing circuitry is further configured to:

send the final reconciliation solution to the other spectrum management device.

15. The spectrum management device according to claim 13, wherein the processing circuitry is further configured to: allocate, according to the spectrum allocation solution of the coexistence system, spectrum resources to secondary systems managed by the spectrum management device.

16. The spectrum management device according to claim 1, wherein the spectrum management device is a coexistence manager CxM or a spectrum access system SAS.

17. A spectrum management method performed by a spectrum management device in a coexistence system, the method comprising:

determining a plurality of reconciliation solutions of an interference overlapping graph according to differences between an interference overlapping graph determined by the spectrum management device and an interference overlapping graph determined by other spectrum management device in the coexistence system; and
determining a final reconciliation solution according to the plurality of reconciliation solutions based on system total utility of the coexistence system.

18. The spectrum management method according to claim 17, wherein determining the plurality of reconciliation solutions comprises:

determining sides with differences according to the interference overlapping graph determined by the spectrum management device and the interference overlapping graph determined by other spectrum management device; and
determining the plurality of reconciliation solutions according to the sides with differences.

19. The spectrum management method according to claim 17, wherein the spectrum management method further comprises:

with respect to an interference overlapping graph corresponding to each of the plurality of reconciliation solutions, perform coloring for the interference overlapping graph, such that points with side connection have different colors and points without side connection have same colors; and
determine system total utility of the interference overlapping graph according to the colored interference overlapping graph.

20. The spectrum management method according to claim 17, wherein determining the final reconciliation solution comprises:
selecting, as the final reconciliation solution, a reconciliation solution with largest system total utility from among the plurality of reconciliation solutions.

21. The spectrum management method according to claim 17, wherein determining the final reconciliation solution comprises:

selecting a first reconciliation solution from among the plurality of reconciliation solutions using a system total utility calculation method of the spectrum management device;
selecting other reconciliation solution from among the plurality of reconciliation solutions using system total utility calculation method of the other spectrum management device; and
determining the final reconciliation solution according to the first reconciliation solution and the other reconciliation solution.

22. The spectrum management method according to claim 21, wherein selecting the first reconciliation solution comprises:

selecting, as the first reconciliation solution, a reconciliation solution with largest system total utility from among the plurality of reconciliation solutions using the system total utility calculation method of the spectrum management device; and
wherein selecting the other reconciliation solution comprises: selecting, as the other reconciliation solution, reconciliation solutions with largest system total utility from among the plurality of reconciliation solutions using the system total utility calculation method of the other spectrum management device.

23. The spectrum management method according to claim 17, wherein determining the final reconciliation solution comprises:

selecting a first reconciliation solution with largest system total utility from among the plurality of reconciliation solutions; and
determining the final reconciliation solution according to the first reconciliation solution and the other reconciliation solution selected by the other spectrum management device.

24. The spectrum management method according to claim 23, wherein determining the final reconciliation solution comprises:
selecting, as the final reconciliation solution, a reconciliation solution with largest system total utility from among the first reconciliation solution and the other reconciliation solution.

25. The spectrum management method according to claim 21 or 23, wherein determining the final reconciliation solution comprises:

for a side on which judgments by the first reconciliation solution and the other reconciliation solution are consistent, determining a judgment on the side to be consistent with the judgments by the first reconciliation solution and the other reconciliation solution;
for a side on which judgments by the first reconciliation solution and the other reconciliation solutions are inconsistent, determining a judgment on the side according to interference suffered by a primary user in the coexistence system; and
determining the final reconciliation solution according to the judgment on all the sides.

26. The spectrum management method according to claim 17, wherein determining the final reconciliation solution comprises:
determining the final reconciliation solution from among the plurality of reconciliation solutions according to the magnitude of the system total utility and a duration for which the system total utility exceeds a predetermined threshold.

27. The spectrum management method according to claim 17, wherein the spectrum management method further comprises:
determining the interference overlapping graph according to all secondary systems in the coexistence system, where points in the interference overlapping graph represent secondary systems, and a side between two points represents that there is an interference between two secondary systems corresponding to the two points.

28. The spectrum management method according to claim 17, wherein the spectrum management method further comprises determining the system total utility of the coexistence system according to one or more of the following parameters: cumulative interference suffered by a primary user in the coexistence system, cumulative interference suffered by a secondary user in the coexistence system, the amount of rollback of transmission power of the secondary user in the coexistence system, spectrum utilization efficiency of the coexistence system, performances of uplinks of the coexistence system, performance of downlinks of the coexistence system, a network capacity of the coexistence system and system total overhead of the coexistence system.

29. The spectrum management method according to claim 17, wherein the spectrum management method further comprises:
determining a spectrum allocation solution of the coexistence system according to the final reconciliation solution, where the spectrum allocation solution includes spectrum resources allocated to each of secondary systems in the coexistence system.

30. The spectrum management method according to claim 17, wherein the spectrum management method further comprises:
sending the final reconciliation solution to the other spectrum management device.

31. The spectrum management method according to claim 29, wherein the spectrum management method further comprises:
allocating, according to the spectrum allocation solution of the coexistence system, spectrum resources to secondary systems managed by the spectrum management device.

32. The spectrum management method according to claim 17, wherein the spectrum management device is a coexistence manager CxM or a spectrum access system SAS.

33. A computer readable storage medium comprising executable computer instructions that, when executed by a computer, cause the computer to perform the spectrum management method according to any one of claims 17 to 32.

Figure 1

Figure 2

CBSD1 ○———□ CBSD4

CBSD2 □———○ CBSD3

Interference overlapping graph
generated by SAS1

CBSD1 ○———□ CBSD4

CBSD2 □———○ CBSD3

Interference overlapping graph
generated by SAS2

Figure 3

CBSD1      CBSD4

CBSD2 Reconciliation CBSD3
      solution 1

CBSD1      CBSD4

CBSD2 Reconciliation CBSD3
      solution2

CBSD1      CBSD4

CBSD2 Reconciliation CBSD3
      solution 3

CBSD1      CBSD4

CBSD2 Reconciliation CBSD3
      solution4

Figure 4

Reconciliation solution 1
System total utility = 0.8

Reconciliation solution 2
System total utility = 0.7

Reconciliation solution 3
System total utility = 0.9

Reconciliation solution 4
System total utility = 0.8

Figure 5

Final reconciliation solution

Figure 6

Figure 7

Figure 8

Figure 9

EP 3 905 746 A1

Figure 10

Figure 11

EP 3 905 746 A1

Initialize the initial population

Calculate the fitness for each individual in each generation of population

Select the outstanding individual

Crossover and mutation

$F > F_{th}$  NO

Iterations

YES

Output the selected individuals

Figure 12

Start

Determine multiple reconciliation solutions of interference overlapping graphs according to the difference between the interference overlapping graph determined by the spectrum management device and the interference overlapping graph determined by other spectrum management devices in the coexistence system — S1310

Determine a final reconciliation solution according to multiple reconciliation solutions based on the system total utility of the coexistence system — S1320

End

Figure 13

32

**1400**

**1404** **1405**

Network
interface

**1406**

**1403** **1402** **1401**

| Storage device | Memory | Processor |

Figure 14

## INTERNATIONAL SEARCH REPORT

| International application No. |
|---|
| **PCT/CN2019/126950** |

**A.    CLASSIFICATION OF SUBJECT MATTER**

H04W 16/14(2009.01)i

According to International Patent Classification (IPC) or to both national classification and IPC

**B.    FIELDS SEARCHED**

Minimum documentation searched (classification system followed by classification symbols)

H04W; H04Q; H04B

Documentation searched other than minimum documentation to the extent that such documents are included in the fields searched

Electronic data base consulted during the international search (name of data base and, where practicable, search terms used)

CNKI, CNPAT, WPI, EPODOC: 频谱, 管理, 干扰, 重叠, 图, 共存, 区别, 差异, 效用, 和解, 分配, 协调, SAS, CBSD, spectrum, manag+, interference, overlap, graph, coexistence, difference, utility, reconciliation, allocat+, coordinat+

**C.    DOCUMENTS CONSIDERED TO BE RELEVANT**

| Category* | Citation of document, with indication, where appropriate, of the relevant passages | Relevant to claim No. |
|---|---|---|
| A | CN 104113888 A (SONY CORPORATION) 22 October 2014 (2014-10-22) claim 19 | 1-33 |
| A | CN 103313252 A (SHANGHAI RESEARCH CENTER FOR WIRELESS COMMUNICATIONS (WICO)) 18 September 2013 (2013-09-18) entire document | 1-33 |
| A | CN 101951609 A (XIDIAN UNIVERSITY) 19 January 2011 (2011-01-19) entire document | 1-33 |
| A | CN 108365901 A (SONY CORPORATION) 03 August 2018 (2018-08-03) entire document | 1-33 |
| A | US 2018213409 A1 (SONY CORPORATION) 26 July 2018 (2018-07-26) entire document | 1-33 |

☐ Further documents are listed in the continuation of Box C.        ☑ See patent family annex.

| *    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **24 February 2020** | **20 March 2020** |

| Name and mailing address of the ISA/CN | Authorized officer |
|---|---|
| **China National Intellectual Property Administration No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/126950**

| Patent document cited in search report | | | Publication date (day/month/year) | Patent family member(s) | | | Publication date (day/month/year) |
|---|---|---|---|---|---|---|---|
| CN | 104113888 | A | 22 October 2014 | WO | 2014169756 | A1 | 23 October 2014 |
| | | | | JP | 2016519524 | A | 30 June 2016 |
| | | | | JP | 2019024220 | A | 14 February 2019 |
| | | | | EP | 2987357 | A1 | 24 February 2016 |
| | | | | US | 2017353261 | A1 | 07 December 2017 |
| | | | | AU | 2014256323 | A1 | 24 September 2015 |
| | | | | US | 2016056908 | A1 | 25 February 2016 |
| CN | 103313252 | A | 18 September 2013 | WO | 2013135087 | A1 | 19 September 2013 |
| | | | | US | 2015078274 | A1 | 19 March 2015 |
| CN | 101951609 | A | 19 January 2011 | None | | | |
| CN | 108365901 | A | 03 August 2018 | US | 2018213409 | A1 | 26 July 2018 |
| | | | | TW | 201828731 | A | 01 August 2018 |
| | | | | EP | 3355603 | A1 | 01 August 2018 |
| US | 2018213409 | A1 | 26 July 2018 | TW | 201828731 | A | 01 August 2018 |
| | | | | CN | 108365901 | A | 03 August 2018 |
| | | | | EP | 3355603 | A1 | 01 August 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811635724